(19) Europäisches Patentamt
European Patent Office
Office européen des brevets

(11) **EP 1 544 994 B1**

(12) **EUROPÄISCHE PATENTSCHRIFT**

(45) Veröffentlichungstag und Bekanntmachung des Hinweises auf die Patenterteilung:
**28.05.2008   Patentblatt 2008/22**

(51) Int Cl.:
*H02M 7/48* (2007.01)    *H02M 1/12* (2006.01)

(21) Anmeldenummer: **04405509.3**

(22) Anmeldetag: **13.08.2004**

(54) **Verbessertes Verfahren zur Symmetrierung eines Gleichspannungskreises einer Umrichterschaltung zur Schaltung von drei Spannungsniveaus**

Improved method for balancing the DC link of a three level inverter

Procédé perfectionné pour équilibrer un circuit intérmédiaire DC d'un onduleur à trois niveaux

(84) Benannte Vertragsstaaten:
**AT BE BG CH CY CZ DE DK EE ES FI FR GB GR HU IE IT LI LU MC NL PL PT RO SE SI SK TR**

(30) Priorität: **15.12.2003   EP 03405895**

(43) Veröffentlichungstag der Anmeldung:
**22.06.2005   Patentblatt 2005/25**

(73) Patentinhaber: **ABB Research Ltd.
8050 Zürich (CH)**

(72) Erfinder:
• **Bilal, Gerhard
5443 Niederrohrdorf (CH)**

• **Sario, Petteri
5408 Ennetbaden (CH)**
• **Herold, Simon
8910 Affoltern am Albis (CH)**

(74) Vertreter: **ABB Patent Attorneys
c/o ABB Schweiz AG,
Intellectual Property (CH-LC/IP),
Brown Boveri Strasse 6
5400 Baden (CH)**

(56) Entgegenhaltungen:
**EP-A- 0 451 440        EP-A- 1 221 761
US-A- 4 953 069         US-B1- 6 288 921**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung bezieht sich auf das Gebiet der Leistungselektronik. Sie geht aus von einem Verfahren zur Symmetrierung eines Gleichspannungskreises einer Umrichterschaltung zur Schaltung von drei Spannungsniveaus gemäss dem Oberbegriff des unabhängigen Anspruchs.

### Stand der Technik

Heute werden in vielen Anwendungen Hochleistungsspannungsumrichter eingesetzt. Ein solcher Umrichter schaltet gängigerweise drei Spannungsniveaus, wozu ein Gleichspannungskreis vorgesehen ist, der durch einen ersten Kondensator und durch einen in Serie zum ersten Kondensator geschalteten zweiten Kondensator gebildet ist. Der Gleichspannungskreis weist weiterhin am ersten Kondensator einen ersten Hauptanschluss, am zweiten Kondensator einen zweiten Hauptanschluss und einen durch die zwei seriell miteinander verbundenen Kondensatoren gebildeten Teilanschluss auf. Weiterhin umfasst der Umrichter zur Schaltung von drei Spannungsniveaus Leistungshalbleiterschalter, welche in üblicher Weise verschaltet sind.

Während des Betriebs der Umrichterschaltung kann es nun vorkommen, dass entweder die am ersten Kondensator anliegende erste Gleichspannung grösser ist als die am zweiten Kondensator anliegende zweite Gleichspannung, oder dass die zweite Gleichspannung grösser ist als die erste Gleichspannung. Um dieser Unsymmetrie entgegenzuwirken, ist in dem Dokument EP 1 513 249 A1 ein Verfahren zur Symmetrierung eines Gleichspannungskreises einer Umrichterschaltung zur Schaltung von drei Spannungsniveaus angegeben. Zunächst wird aus einer am ersten Kondensator anliegenden ersten Gleichspannung und aus einer am zweiten Kondensator anliegenden zweiten Gleichspannung ein Gleichspannungsdifferenzwert gebildet. Weiterhin wird gemäss dem Dokument EP 1 513 249 A1 jede Phase der Umrichterschaltung durch Leistungshalbleiterschalter der Umrichterschaltung nach jeweils einer vorgegebenen Abfolge, sogenanntes Pulsmuster, von Schaltzuständen innerhalb einer vorgegebenen Zeitdauer mit dem ersten Hauptanschluss, mit dem zweiten Hauptanschluss oder mit dem Teilanschluss des Gleichspannungskreises verbunden, wobei die Schaltzustände der Phasen zueinander durch Schaltzustandskombinationen vorgegeben sind und die Schaltzustandskombinationen in einem Abfolgeablauf festgelegt sind.

Ein weiteres Verfahren zur Symmetrierung eines Gleichspannungskreises eines Umrichterschaltung zur Schaltung von drei Spannungsniveaus ist in dem Dokument EP 0 451 440 A2 aufgezeigt.

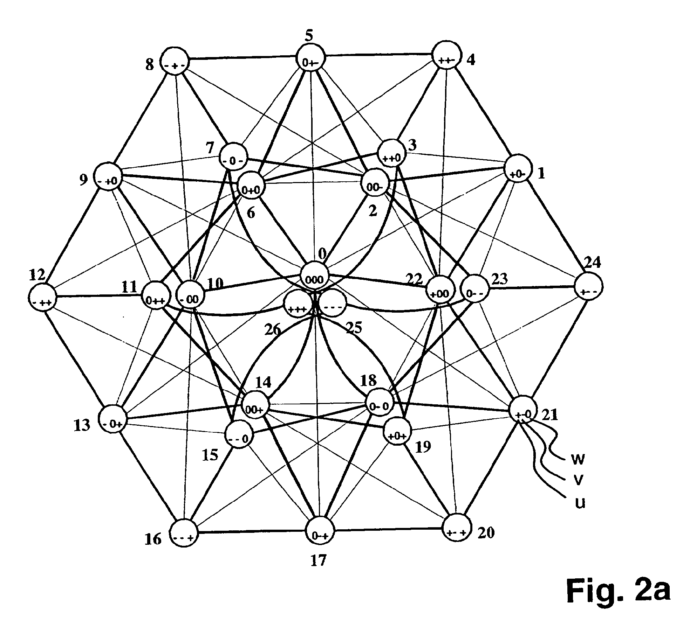

In einem in Fig. 2a gezeigten Zustandsdiagramm sind diese Schaltzustandkombinationen und deren Übergänge zueinander gezeigt, wobei "+" für eine Verbindung der entsprechenden Phase mit dem ersten Hauptanschluss, "-" für eine Verbindung der entsprechenden Phase mit dem zweiten Hauptanschluss und "0" für eine Verbindung der entsprechenden Phase mit dem Teilanschluss steht. Ein vorstehend genannter Abfolgeablauf von Schaltzustandskombinationen wäre dann beispielsweise 5 - 3 - 22 - 0. Die Übergänge selbst werden durch minimal einzuhaltende Einschaltdauern der Leistungshalbleiterschalter und/oder durch minimal einzuhaltende Ausschaltdauern der Leistungshalbleiterschalter und/oder durch eine gemeinsame Beschaltung der Phasen der Umrichterschaltung bestimmt.

Darüber hinaus wird der vorstehend genannte Gleichspannungsdifferenzwert auf einen Schwellwert hin überwacht, wobei bei Überschreiten des Schwellwertes, d.h. falls die erste Gleichspannung grösser ist als die zweite Gleichspannung, oder bei Unterschreiten des Schwellwertes, d.h. falls die zweite Gleichspannung grösser ist als die erste Gleichspannung, die drei Phasen nach einer aus den Schaltzustandskombinationen ausgewählten Schaltzu-standskombination mit dem ersten Hauptanschluss, mit dem zweiten Hauptanschluss oder mit dem Teilanschluss verbunden werden. Die Auswahl der geeigneten Schaltzustandskombination erfolgt in Abhängigkeit der vorangehenden Schaltzustandskombination des Abfolgeablaufs, der Flussrichtung eines Phasenstromes und des Überschreitens oder des Unterschreitens des Schwellwertes. Durch die vorstehend beschriebene Verbindung der drei Phasen mit dem ersten Hauptanschluss, mit dem zweiten Hauptanschluss oder mit dem Teilanschluss wird erreicht, dass beispielsweise bei einer auftretenden Unsymmetrie des Gleichspannungskreises im Betriebsfall der Umrichterschaltung, d.h. falls zum Beispiel die erste Gleichspannung betragsmässig grösser als die zweite Gleichspannung ist, die erste Gleichspannung betragsmässig verringert wird, so dass eine betragsmässige Angleichung an die zweite Gleichspannung erfolgt und somit eine symmetrische Verteilung der beiden Gleichspannungen des Gleichspannungskreises erzielt werden kann.

In dem in Dokument EP 1 513 249 A1 beschriebenen Verfahren zur Symmetrierung eines Gleichspannungskreises einer Umrichterschaltung zur Schaltung von drei Spannungsniveaus erfolgt die Auswahl der geeigneten Schaltzustandskombination, wie bereits erwähnt, in Abhängigkeit der vorangehenden Schaltzustandskombination des Abfolgeablaufs, d.h. beim vorstehend beispielhaft erwähnten Abfolgeablauf 5 - 3 - 22 - 0 gemäss Fig.2a wird bei einer Unsymmetrie des Gleichspannungskreises zum Beispiel von der Schaltzustandskombination 3 zur ausgewählten Schaltzustandskombination 23 übergegangen und jede Phase demnach mit dem dieser ausgewählten Schaltzustandskombination 23 entsprechenden Anschluss verbunden. Dieser Übergang dient zwar möglicherweise der Symmetrierung des Gleichspannungskreises, erzeugt aber in den Phasenausgangsspannungen unerwünscht grosse Oberschwingungen beziehungsweise Änderung der Grundschwingung der Phasenausgangsspannungen und ist somit unzulässig. Eine an die Phasen der Umrichterschaltung angeschlossene Last kann damit durch einen solchen Übergang beschädigt oder gar zerstört werden. Weiterhin kann eine normalerweise vorgesehene Regelung der Umrichterschaltung und damit die gesamte Umrichterschaltung durch die grossen Oberschwingungen instabil werden.

**Darstellung der Erfindung**

Aufgabe der Erfindung ist es deshalb, ein verbessertes Verfahren zur Symmetrierung eines Gleichspannungskreises einer Umrichterschaltung zur Schaltung von drei Spannungsniveaus anzugeben, durch welches Ungleichheiten in den Beträgen von Gleichspannungen an Kondensatoren des Gleichspannungskreises in einfacher Weise und ohne nennenswerte Erzeugung von Oberschwingungen beziehungsweise Änderung der Grundschwingung der Phasenausgangsspannungen der Umrichterschaltung kompensiert werden können. Diese Aufgabe wird durch die Merkmale des Anspruchs 1 gelöst. In den abhängigen Ansprüchen sind vorteilhafte Weiterbildungen der Erfindung angegeben.

Beim erfindungsgemässen Verfahren zur Symmetrierung eines Gleichspannungskreises einer Umrichterschaltung zur Schaltung von drei Spannungsniveaus ist der Gleichspannungskreis durch einen ersten Kondensator und durch einen in Serie zum ersten Kondensator geschalteten zweiten Kondensator gebildet und weist weiterhin am ersten Kondensator einen ersten Hauptanschluss, am zweiten Kondensator einen zweiten Hauptanschluss und einen durch die zwei seriell verbundenen Kondensatoren gebildeten Teilanschluss auf, wobei aus einer am ersten Kondensator anliegenden ersten Gleichspannung und aus einer am zweiten Kondensator anliegenden zweiten Gleichspannung ein Gleichspannungsdifferenzwert gebildet wird. Ferner wird jede Phase der Umrichterschaltung durch Leistungshalbleiterschalter der Umrichterschaltung nach jeweils einer vorgegebenen Abfolge von Schaltzuständen innerhalb einer vorgegebenen Zeitdauer mit dem ersten Hauptanschluss, mit dem zweiten Hauptanschluss oder mit dem Teilanschluss verbunden, wobei die Schaltzustände der Phasen zueinander durch Schaltzustandskombinationen vorgegeben sind. Die Schaltzustandskombinationen sind weiterhin in einem Abfolgeablauf festgelegt. Darüber hinaus wird der Gleichspannungsdifferenzwert auf einen Schwellwert hin überwacht wird, wobei bei Überschreiten oder Unterschreiten des Schwellwertes die Phasen nach einer aus den Schaltzustandskombinationen in Abhängigkeit der vorangehenden Schaltzustandskombination des Abfolgeablaufs, der Flussrichtung eines Phasenstromes und des Überschreitens oder des Unterschreitens des Schwellwertes ausgewählten Schaltzustandskombination mit dem ersten Hauptanschluss, mit dem zweiten Hauptanschluss oder mit dem Teilanschluss verbunden werden.

Erfindungsgemäss werden die Phasen bei einem unzulässigen Übergang zur ausgewählten Schaltzustandskombination, d.h. einem die Grundschwingung von Phasenausgangsspannungen ändernden Übergang, in einem ersten Schritt nach einer dieselben Phasenleiterspannungen wie die ausgewählte Schaltzustandskombination erzeugende Schaltzustandskombination mit dem ersten Hauptanschluss, mit dem zweiten Hauptanschluss oder mit dem Teilanschluss verbunden, wobei die dieselben Phasenleiterspannungen wie die ausgewählte Schaltzustandskombination erzeugende Schaltzustandskombination die im Abfolgeablauf nächstfolgende Schaltzustandskombination ist. Ferner werden die Phasen in einem zweiten Schritt nach einer gewählten ersten zusätzlichen Schaltzustandskombination und danach in einem dritten Schritt nach der ausgewählten Schaltzustandskombination mit dem ersten Hauptanschluss, mit dem zweiten Hauptanschluss oder mit dem Teilanschluss verbunden. In einem vierten Schritt werden dann die Phasen nach einer gewählten zweiten zusätzlichen Schaltzustandskombination mit dem ersten Hauptanschluss, mit dem zweiten Hauptanschluss oder mit dem Teilanschluss verbunden, wobei die erste und die zweite zusätzliche Schaltzustandskombination derart gewählt werden, dass die je Phase aus den der ersten und zweiten zusätzlichen Schaltzustandskombination entsprechenden Phasenausgangsspannungen gebildeten Mittelwerte jeweils gleich den in Bezug auf die Phase entsprechenden Phasenausgangsspannungen der dieselben Phasenleiterspannungen wie die ausgewählte Schaltzustandskombination erzeugende Schaltzustandskombination sind.

Mittels der vorstehend genannten erfindungsgemässen Schritte eins bis vier wird vorteilhaft erreicht, dass Ungleichheiten in den Beträgen von Gleichspannungen an Kondensatoren des Gleichspannungskreises in einfacher Weise kompensiert werden, wobei gleichzeitig nahezu keine nennenswerten Oberschwingungen beziehungsweise Änderung der Grundschwingung der Phasenausgangsspannungen der Umrichterschaltung erzeugt werden. Die Qualität der Phasenausgangsspannungen kann durch das erfindungsgemässe Verfahren somit entscheidend verbessert werden.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1 eine Ausführungsform einer dreiphasigen Umrichterschaltung zur Schaltung von drei Spannungsniveaus,

Fig. 2a    ein Zustandsdiagramm mit Schaltzustand-kombinationen der Phasen der Umrichter-schaltung,

Fig. 2b    typische Zeitverläufe der Phasenausgangsspannungen der Umrichterschaltung nach Fig. 1,

Fig. 2c    eine Tabelle mit aus Fig. 2a ausgewählten Schaltzustandskombinationen und

Fig. 3    ein Zustandsdiagramm mit Schaltzustand-kombinationen der Phasen der Umrichter-schaltung gemäss Fig. 2a und beispielhaft hervorgehobenen Schaltzustandkombinationen entsprechend den erfindungsgemässen Schritten des erfindungsgemässen Verfahrens.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

**Wege zur Ausführung der Erfindung**

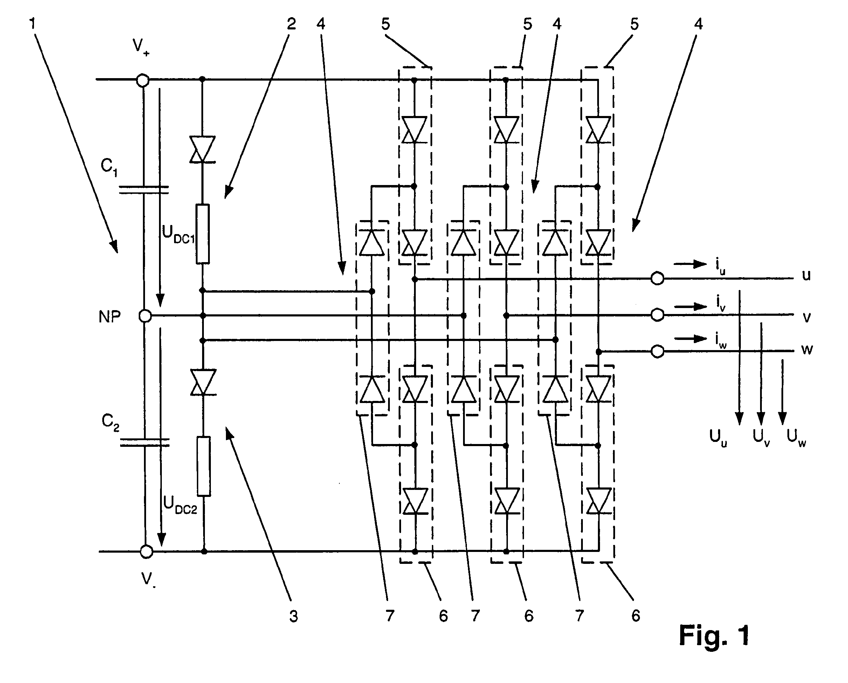

In Fig. 1 ist eine Ausführungsform einer dreiphasigen Umrichterschaltung zur Schaltung von drei Spannungsniveaus gezeigt. Die Umrichterschaltung nach Fig. 1 weist einen Gleichspannungskreis 1 auf, der durch einen ersten Kondensator $C_1$ und durch einen in Serie zum ersten Kondensator $C_1$ geschalteten zweiten Kondensator $C_2$ gebildet ist. Weiterhin weist der Gleichspannungskreis 1 am ersten Kondensator $C_1$ einen er-sten Hauptanschluss $V_+$, am zweiten Kondensator $C_2$ einen zweiten Hauptanschluss V- und einen durch die zwei seriell verbundenen Kondensatoren $C_1$, $C_2$ gebil-deten Teilanschluss NP auf. Darüber hinaus umfasst die Umrichterschaltung gemäss Fig. 1 ein für jede Phase u, v, w vorgesehenes Teilumrichtersystem 4, welches jeweils durch eine erste Schaltgruppe 5, durch eine zweite Schaltgruppe 6 und durch eine dritte Schaltgruppe 7 gebildet ist, wobei jede Schaltgruppe 5, 6, 7 durch zwei in Serie geschaltete Leistungshalbleiterschalter gebildet ist. Weiterhin ist bei jedem Teilumrichtersystem 4 die erste Schaltgruppe 5 mit dem ersten Hauptanschluss $V_+$ und die zweite Schaltgruppe 6 mit dem zweiten Hauptanschluss V- verbunden. Ferner ist die erste Schaltgruppe 5 mit der zweiten Schaltgruppe 6 seriell verbunden, wobei der Verbindungspunkt der ersten Schaltgruppe 5 mit der zweiten Schaltgruppe 6 einen Phasenanschluss bildet. Die dritte Schaltgruppe 7, welche als Klemmschaltgruppe ausgebildet ist, ist mit der ersten Schaltgruppe 5, insbesondere mit dem Verbindungspunkt der zwei in Serie geschalteten Leistungshalbleiterschalter der ersten Schaltgruppe 5, verbunden. Zudem ist die dritte Schaltgruppe 7 mit der zweiten Schaltgruppe 6, insbesondere mit dem Verbindungspunkt der zwei in Serie geschalteten Leistungshalbleiterschalter der zweiten Schaltgruppe 6, verbunden. Darüber hinaus ist die dritte Schaltgruppe 7, insbesondere der Verbindungspunkt der zwei in Serie geschalteten Leistungshalbleiterschalter der dritten Schaltgruppe 7, mit dem Teilanschluss NP verbunden. Die Leistungshalbleiterschalter der ersten und zweiten Schaltgruppe 5, 6 sind gemäss Fig. 1 als ansteuerbare bidirektionale Leistungshalbleiterschalter ausgebildet, wobei die Leistungshalbleiterschalter der dritten Schaltgruppe als unidirektionale nicht-ansteuerbare Halbleiterschalter ausgebildet sind. Es ist aber auch denkbar, das auch die Leistungshalbleiterschalter der dritten Schaltgruppe als ansteuerbare bidirektionale Leistungshalbleiterschalter ausgebildet sind. Gemäss Fig. 1 ist bei der Umrichterschaltung gängigerweise eine erste parallel zum ersten Kondensator $C_1$ geschaltete Spannungsreduziereinrichtung 2 vorgesehen. Weiterhin ist gemäss Fig. 1 eine zweite parallel zum zweiten Kon-densator $C_2$ geschaltete Spannungsreduziereinrichtung 3 vorgesehen. Die erste und zweite Spannungsreduziereinrichtung 2, 3 ist jeweils durch einen Widerstand und einen in Serie zum Widerstand geschalteten Schalter gebildet, wobei und die erste und zweite Spannungsreduziereinrichtung 2, 3 durch Schliessen des zugehörigen Schalters betätigt wird. Vorteilhaft wird bei der Betätigung des jeweiligen Schalters Energie des zugehörigen Kondensators $C_1$, $C_2$ in Wärme im zugehörigen Widerstand umgesetzt und somit die zugehörige Gleichspannung $U_{DC1}$, $U_{DC2}$ einfach, schnell und effektiv verringert, so dass die betragsmässige Angleichung der beiden Gleichspannungen $U_{DC1}$, $U_{DC2}$ in erwünschtem Masse erfolgt. Vorzugsweise erfolgt die Betätigung der ersten und zweiten Spannungsreduziereinrichtung jeweils für eine vorgegebene Zeitdauer. Diese Zeitdauer wird vorzugsweise in Abhängigkeit der thermischen Kapazität des Widerstandes vorgegeben. Die Betätigung erfolgt nach für den Fachmann bekannten Kriterien, auf die an dieser Stelle nicht näher eingegangen wird.

Es wird nun aus einer am ersten Kondensator $C_1$ anliegenden ersten Gleichspannung $U_{DC1}$ und aus einer am zweiten Kondensator $C_2$ anliegenden zweiten Gleichspannung $U_{DC2}$ ein Gleichspannungsdifferenz-wert $\overline{U_{NP}}$ gebildet. Der Gleichspannungsdifferenzwert $\overline{U_{NP}}$ wird dabei nach folgender Formel generiert:

$$\overline{U_{NP}} = \left| U_{DC1} \right| - \left| U_{DC2} \right|$$

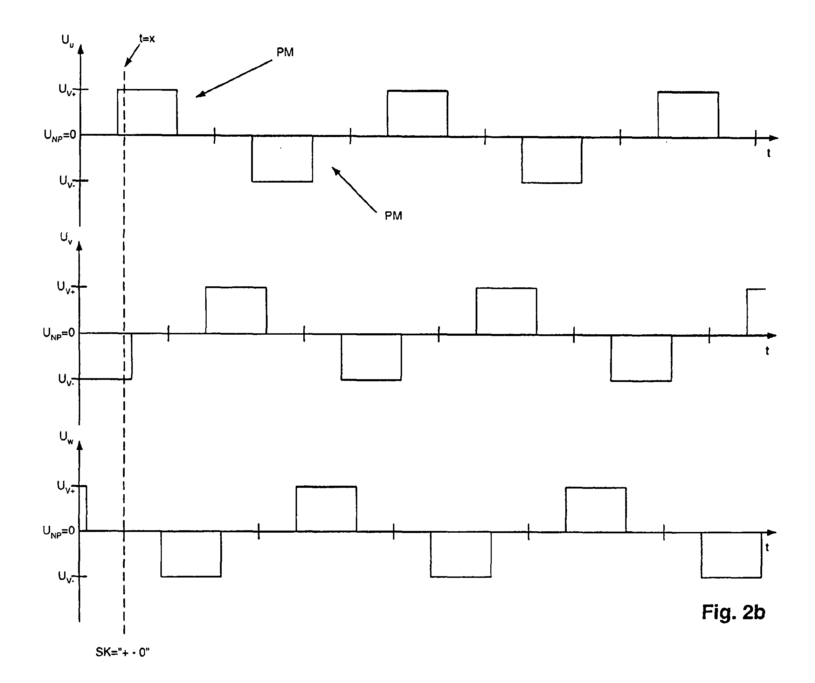

Ferner wird jede Phase u, w, v der Umrichterschaltung durch die Leistungshalbleiterschalter nach jeweils einer vorgegebenen Abfolge PM von Schaltzuständen innerhalb einer vorgegebenen Zeitdauer mit dem ersten Hauptanschluss $V_+$, mit dem zweiten Hauptanschluss V. oder mit dem Teilanschluss NP verbunden, wobei die Schaltzustände der Phasen u, v, w zueinander durch Schaltzustandskombinationen SK vorgegeben sind. Wie bereits eingangs erwähnt, ist in Fig. 2a ein Zustandsdiagramm dieser Schaltzustandskombinationen SK gezeigt, wobei "+" für eine Verbindung der entsprechenden Phase u, v, w mit dem ersten Hauptanschluss $V_+$, "-" für eine Verbindung der entsprechenden Phase u, v, w mit dem zweiten Hauptanschluss V- und "0" für eine Verbindung der entsprechenden Phase u, v, w mit dem Teilanschluss NP steht und die Linien zwischen den Schaltzustandskombinationen SK zulässige Übergänge zwischen den Schaltzustandskombinationen SK darstellen. In Fig. 2b sind typische Zeitverläufe der Phasenausgangsspannungen $U_u$, $U_v$, $U_w$ der Umrichterschaltung nach Fig. 1 dargestellt. Darin ist detailliert gezeigt, wie die einzelnen Phasenausgangsspannungen $U_u$, $U_v$, $U_w$ durch die jeweiligen Abfolgen PM von Schaltzuständen gebildet werden, wobei als Beispiel bei der Phasenausgangsspannung $U_u$ für die Phase U eine Abfolge PM für die erste Hälfte der Periodendauer der Phasenausgangsspannung $U_u$ als vorstehend genannte vorgegebene Zeitdauer und eine Abfolge PM für die zweite Hälfte der Periodendauer der Phasenausgangsspannung $U_u$ als vorstehend genannte vorgegebene Zeitdauer speziell gekennzeichnet ist. Die Phasenausgangsspannungen $U_v$, $U_w$ der Phase v und Phase w ergeben sich gemäss Fig. 2b aus der Phasenausgangsspannung $U_u$ durch eine Phasenverschiebung um 120˚ beziehungsweise um 240˚. Solche Abfolgen werden gängigerweise auch als sogenannte Pulsmuster bezeichnet. Bei den Schaltzuständen gemäss Fig. 2b werden nur Spannungen $U_{V+}$, 0 oder $U_{V-}$ geschaltet, wobei bei einem symmetrischen Gleichspannungskreis 1 $U_{DC1}=U_{DC2}=U_{V+}=-U_{V-}$ ist. Ferner ist in Fig. 2b beispielhaft eine Schaltzustandskombination SK der Phasen u, v, w zueinander zum Zeitpunkt t=x herausgestellt, welche sich zu SK="+ - 0" ergibt und der Schaltzustandskombination 21 gemäss Fig. 2a entspricht. Weiterhin wird der vorstehend erwähnte Gleichspannungsdifferenzwert $\overline{U_{NP}}$ auf einen Schwellwert $U_{DCS1}$ hin überwacht, wobei bei Überschreiten oder Unterschreiten des Schwellwertes $U_{DCS1}$ die Phasen u, v, w nach einer aus den Schaltzustandskombinationen SK in Abhängigkeit der vorangehenden Schaltzustandskombination $SK_v$ des Abfolgeablaufs, der Flussrichtung eines Phasenstromes $i_u$, $i_v$, $i_w$ und des Überschreitens oder des Unterschreitens des Schwellwertes $U_{DCS1}$ ausgewählten Schaltzustandskombination $SK_a$ mit dem ersten Hauptanschluss $V_+$, mit dem zweiten Hauptanschluss V- oder mit dem Teilanschluss NP verbunden werden.

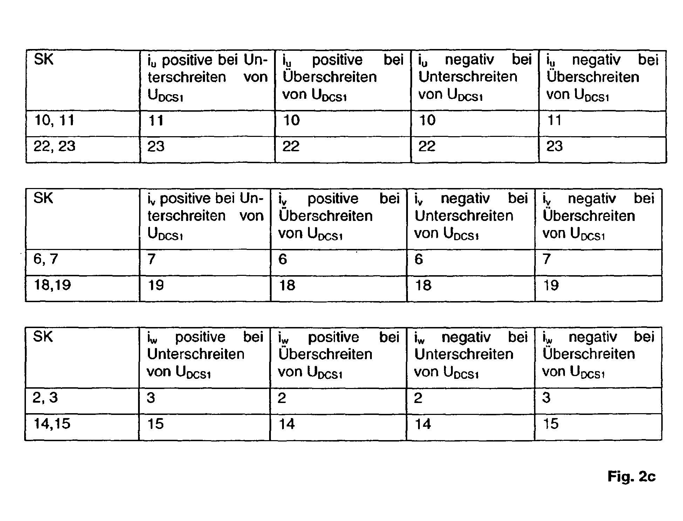

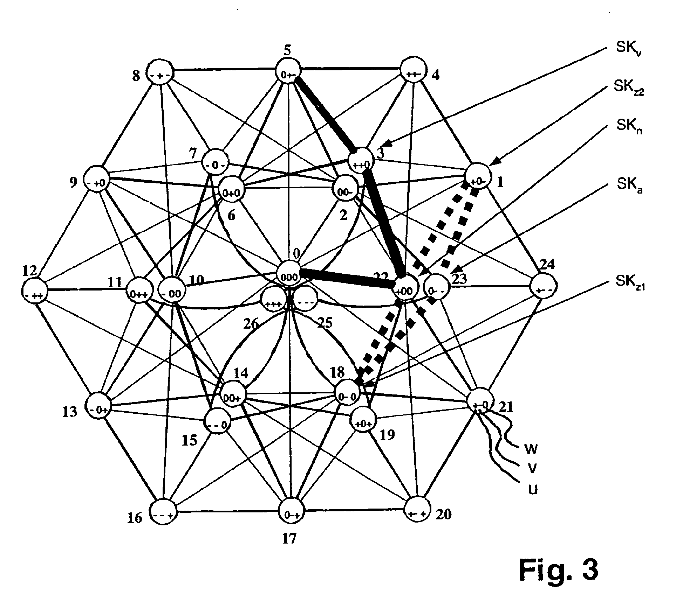

In Fig. 3 ist ein Zustandsdiagramm mit Schaltzustandkombinationen SK der Phasen der Umrichterschaltung gemäss Fig. 2a und beispielhaft hervorgehobenen Schaltzustandkombinationen $SK_a$, $SK_n$, $SK_{z1}$, $SK_{z2}$ entsprechend den nachfolgend detailliert erläuterten erfindungsgemässen Schritten des erfindungsgemässen Verfahrens dargestellt. Wie bereits eingangs erwähnt, wird von einem beispielhaften Abfolgeablauf 5 - 3 - 22 - 0 von Schaltzustandskombinationen SK ausgegangen, wobei dieser Abfolgeablauf durch dicke Linien im Zustandsdiagramm gemäss Fig. 3 speziell gekennzeichnet ist. Falls während des Abfolgeablaufs beispielsweise bei der Schaltzustandskombination 3 bei einer Unsymmetrie des Gleichspannungskreises 1 die Schaltkombination 23 nach den bereits erwähnten Abhängigkeiten als ausgewählte Schaltzustandskombination $SK_a$ gewählt wird, dieser Übergang aber bekanntermassen unerwünscht grosse Oberschwingungen beziehungsweise Änderung der Grundschwingung der Phasenausgangsspannungen $U_u$, $U_v$, $U_w$ generiert und somit unzulässig ist, werden die Phasen u, v, w erfindungsgemäss bei einem allgemein unzulässigen Übergang zur ausgewählten Schaltzustandskombination $SK_a$ in einem ersten Schritt nach einer dieselben Phasenleiterspannungen $U_{uv}$, $U_{vw}$, $U_{wu}$ wie die ausgewählte Schaltzustandskombination $SK_a$ erzeugende Schaltzustandskombination $SK_n$ mit dem ersten Hauptanschluss $V_+$, mit dem zweiten Hauptanschluss V- oder mit dem Teilanschluss NP verbunden. Bei den Phasenleiterspannungen $U_{uv}$, $U_{vw}$, $U_{wu}$ handelt es sich um die Spannungen, welche zwischen den Phasenleitern auftreten (verkettete Spannungen). Die dieselben Phasenleiterspannungen $U_{uv}$, $U_{vw}$, $U_{wu}$ wie die ausgewählte Schaltzustandskombination $SK_a$ erzeugende Schaltzustandskombination $SK_n$ ist die im Abfolgeablauf nächstfolgende Schaltzustandskombination $SK_n$. Gemäss Fig. 3 ist diese im Abfolgeablauf nächstfolgende Schaltzustandskombination $SK_n$ beispielhaft dann die Schaltzustandskombination 22, welche auf die Schaltzustandskombination 3 folgt. Es sei erwähnt, dass es sich bei den Phasenleiterspannungen $U_{uv}$, $U_{vw}$, $U_{wu}$ um Spannungen zwischen den Phasen u,v beziehungsweise v,w beziehungsweise w,u handelt, wobei die Phasenleiterspannungen $U_{uv}$, $U_{vw}$, $U_{wu}$ der Übersichtlichkeit halber in Fig. 1 nicht dargestellt sind. Sämtliche ausgewählte Schaltzustandskombinationen $SK_a$ sind in einer Tabelle gemäss Fig. 2c zusammengestellt. Diese Schaltzustandskombinationen $SK_a$ treten gemäss Fig. 2c und Fig. 3 paarweise auf, d.h. die paarweisen Schaltzustandskombinationen $SK_a$ erzeugen dieselben Phasenleiterspannungen $U_{uv}$, $U_{vw}$, $U_{wu}$. Demnach ist nach dem beispielhaften Abfolgeablauf 5 - 3 - 22 - 0 gemäss Fig. 3 bei einer Unsymmetrie des Gleichspannungszwischenkreises 1 die ausgewählte Schaltzustandskombination 23 zu wählen, wobei gemäss dem ersten Schritt dann die Phasen u, v, w nach der dieselben Phasenleiterspannungen $U_{uv}$, $U_{vw}$, $U_{wu}$ wie die ausgewählte Schaltzustandskombination $SK_a$ erzeugende Schaltzustandskombination $SK_n$, nämlich nach der Schaltzustandskombination 22 gemäss Fig. 2c und Fig. 3, verbunden werden. Darüber hinaus sind zu den jeweiligen ausgewählten Schaltzustandkombinationen $SK_a$ nach Fig. 2c die bereits erwähnte Abhängigkeit der Flussrichtung eines Phasenstromes $i_u$, $i_v$, $i_w$ und des Überschreitens oder des Unterschreitens des Schwellwertes $U_{DCS1}$ für die ausgewählte Schaltzustandskombination $SK_a$ an-

gegeben.

In einem zweiten Schritt werden die Phasen u, v, w erfindungsgemäss nach einer gewählten ersten zusätzlichen Schaltzustandskombination $SK_{z1}$ und danach in einem dritten Schritt nach der ausgewählten Schaltzustandskombination $SK_a$ mit dem ersten Hauptanschluss $V_+$, mit dem zweiten Hauptanschluss V- oder mit dem Teilanschluss NP verbunden. Gemäss Fig. 3 ist die erste zusätzliche Schaltzustandskombination $SK_{z1}$ beispielhaft die Schaltkombination 18 und die ausgewählte Schaltzustandskombination $SK_a$ die schon mehrfach erwähnte Schaltkombination 23. Darüber hinaus werden die Phasen u, v, w erfindungsgemäss in einem vierten Schritt nach einer gewählten zweiten zusätzlichen Schaltzustandskombination $SK_{z2}$ mit dem ersten Hauptanschluss $V_+$, mit dem zweiten Hauptanschluss V. oder mit dem Teilanschluss NP verbunden. Gemäss Fig. 3 ist die zweite zusätzliche Schaltzustandskombination $SK_{z2}$ beispielhaft die Schaltkombination 1. In Fig. 3 sind die Übergänge gemäss dem zweiten Schritt und gemäss dem vierten Schritt durch gestrichelte dicke Linien speziell gekennzeichnet. Vorzugsweise werden die erste und die zweite zusätzliche Schaltzustandskombination $SK_{z1}$, $SK_{z2}$ derart gewählt, dass die je Phase u, v, w aus den der ersten und zweiten zusätzlichen Schaltzustandskombination $SK_{z1}$; $SK_{z2}$ entsprechenden Phasenausgangsspannungen $U_{u,SK1}$, $U_{v,SKz1}$, $U_{w,SKz1}$, $U_{u,SK2}$, $U_{v,SKz2}$, $U_{w,SKz2}$ gebildeten Mittelwerte $\overline{U_u}$, $\overline{U_v}$, $\overline{U_w}$ jeweils gleich den in Bezug auf die Phase u, v, w entsprechenden Phasenausgangsspannungen $U_u$, $U_v$, $U_w$ der dieselben Phasenleiterspannungen $U_{uv}$, $U_{vw}$, $U_{wu}$ wie die ausgewählte Schaltzustandskombination $SK_a$ erzeugende Schaltzustandskombination $SK_n$ sind. Der zeitliche Mittelwert $\overline{U_u}$ für die Phase u ist definiert:

$$\overline{U_u} = \frac{U_{u,SKz1} \cdot t_1 + U_{u,SKz2} \cdot t_2}{t_1 + t_2},$$

wobei $t_1$ die Anliegezeit für die Spannung $U_{u,SK1}$ und $t_2$ die Anliegezeit für die Spannung $U_{u,SK2}$ ist und $t_1 = t_2$ ist. Die zeitlichen Mittelwerte $\overline{U_v}$, $\overline{U_w}$ für die Phase v und die Phase w ergeben sich entsprechend der vorstehend genannten Formel.

Durch den vorstehend beschriebenen ersten Schritt wird vorteilhaft erreicht, dass keine Oberschwingungen beziehungsweise Änderung der Grundschwingung der Phasenausgangsspannungen $U_u$, $U_v$, $U_w$ erzeugt werden, da beim der Abfolgeablauf einhalten wird. Der bereits erläuterte zweite Schritts wird ferner als Ausgangspunkt für den Übergang zur ausgewählten Schaltzustandskombinationen $SK_a$ gemäss dem dritten Schritt benötigt. Dieser vorstehend beschriebe dritte Schritt bewirkt dann vorteilhaft, dass beispielsweise bei einer auftretenden Unsymmetrie des Gleichspannungskreises 1 im Betriebsfall der Umrichterschaltung, d.h. falls zum Beispiel die ersten Gleichspannung $U_{DC1}$ betragsmässig grösser als die zweite Gleichspannung $U_{DC2}$ ist, die erste Gleichspannung $U_{DC1}$ betragsmässig verringert wird, so dass eine betragsmässige Angleichung an die zweite Gleichspannung $U_{DC2}$ erfolgt und somit eine symmetrische Verteilung der beiden Gleichspannungen $U_{DC1}$, $U_{DC2}$ des Gleichspannungskreis 1 erzielt werden kann. Mittels der ausgewählten Schaltzustandskombinationen $SK_a$ gemäss dem dritten Schritt und nach Fig. 2c werden Ungleichheiten in den Beträgen zwischen der ersten und zweiten Gleichspannung $U_{DC1}$, $U_{DC2}$ sehr spezifisch, d.h. nach den Fallunterscheidungen gemäss Fig. 2c, ausgeglichen und somit eine Symmetrierung des Gleichspannungskreises 1 in sehr einfacher Weise und ohne nennenswerte Schaltverluste der Umrichterschaltung erzielt. Somit kann eine Symmetrierung des Gleichspannungskreises 1 durch die vorstehend beschriebene Massnahme schnell und ohne Spannungsänderung für eine an die Phasen u, v, w angeschlossenen elektrischen Last erreicht werden. Der bereits erläuterte vierte Schritt wird schliesslich als Ausgangspunkt für den Übergang zurück zum Abfolgeablauf der Schaltzustandskombinationen SK benötigt, wobei dieser fünfte Schritt nachfolgend detailliert beschrieben wird. Darüber hinaus dient die Wahl der ersten zusätzlichen Schaltzustandskombination $SK_{z1}$ des zweiten Schritts und die Wahl der zweiten zusätzlichen Schaltzustandskombination $SK_{z2}$ des vierten Schritts vorteilhaft dazu, dass beim Übergang zur ausgewählten Schaltzustandskombination $SK_a$, d.h. zum dritten Schritt, und beim Übergang von der ausgewählten Schaltzustandskombination $SK_a$, d.h. vom dritten Schritt, nahezu keine nennenswerten Oberschwingungen beziehungsweise Änderung der Grundschwingung der Phasenausgangsspannungen $U_u$, $U_v$, $U_w$ bei gleichzeitiger vorstehend beschriebener Kompensation einer auftretenden Unsymmetrie des Gleichspannungskreises 1 mittels der ausgewählten Schaltzustandskombination $SK_a$ erzeugt werden.

Die Phasen u, v, w werden vorzugsweise in dem bereits erwähnten fünften Schritt gemäss Fig. 3 nach der dieselben Phasenleiterspannungen $U_{uv}$, $U_{vw}$, $U_{wu}$ wie die ausgewählte Schaltzustandskombination $SK_a$ erzeugende Schaltzustandskombination $SK_n$ mit dem ersten Hauptanschluss $V_+$, mit dem zweiten Hauptanschluss $V_-$ oder mit dem Teilanschluss NP verbunden. In Fig. 3 ist die der dieselben Phasenleiterspannungen $U_{uv}$, $U_{vw}$, $U_{wu}$ wie die ausgewählte Schaltzustandskombination $SK_a$ erzeugende Schaltzustandskombination $SK_n$ gemäss dem fünften Schritt dann die Schaltzustandskombination 22, so dass durch den fünften Schritt wieder zurück zum Abfolgeablauf der Schaltzustandskombinationen SK gelangt werden kann und der Abfolgeablauf der Schaltzustandskombinationen SK danach weiter fortgesetzt werden kann.

Vorzugsweise wird bei der ausgewählten Schaltzustandskombination $SK_a$ nur eine Anzahl der Phasen u, v, w mit dem ersten Hauptanschluss $V_+$ und die restliche Anzahl der Phasen u, v, w mit dem Teilanschluss NP oder nur eine Anzahl der Phasen u, v, w mit dem zweiten Hauptanschluss V- und der restliche Teil der Phasen u, v, w mit dem Teilanschluss NP verbunden.

Desweiteren wird der Schwellwert $U_{DCS1}$ vorzugsweise in der Grössenordnung zwischen 0% und 3% der Summe der ersten und zweiten Gleichspannung $U_{DC1}$, $U_{DC2}$ gewählt, so dass auftretende Ungleichheiten in den Beträgen zwischen der ersten und zweiten Gleichspannung $U_{DC1}$, $U_{DC2}$ durch die vorstehend genannten Verfahrensschritte bei Überschreiten und Unterschreiten des Schwellwertes $U_{DCS1}$ sehr frühzeitig und damit sehr schnell ausgeglichen werden können.

Insgesamt stellt das erfindungsgemässe verbesserte Verfahren zur Symmetrierung des Gleichspannungskreises 1 der Umrichterschaltung zur Schaltung von drei Spannungsniveaus eine sehr einfache, effiziente und somit kostengünstige Lösung dar, Ungleichheiten in den Beträgen der Gleichspannungen $U_{DC1}$, $U_{DC2}$ an den Kondensatoren $C_1$, $C_2$ des Gleichspannungskreises 1 ohne Erzeugung nennenswerter Oberschwingungen beziehungsweise Änderung der Grundschwingung der Phasenausgangsspannungen $U_u$, $U_v$, $U_w$ zu kompensieren.

**Bezugszeichenliste**

1 Gleichspannungskreis
2 erste Spannungsreduziereinrichtung
3 zweite Spannungsreduziereinrichtung
4 Teilumrichtersystem
5 erste Schaltgruppe
6 zweite Schaltgruppe
7 dritte Schaltgruppe

**Patentansprüche**

**1.** Verfahren zur Symmetrierung eines Gleichspannungskreises (1) einer Umrichterschaltung zur Schaltung von drei Spannungsniveaus, bei dem der Gleichspannungskreis (1) durch einen ersten Kondensator ($C_1$) und durch einen in Serie zum ersten Kondensator ($C_1$) geschalteten zweiten Kondensator ($C_2$) gebildet ist und am ersten Kondensator ($C_1$) einen ersten Hauptanschluss ($V_+$), am zweiten Kondensator ($C_2$) einen zweiten Hauptanschluss (V.) und einen durch die zwei seriell verbundenen Kondensatoren ($C_1$, $C_2$) gebildeten Teilanschluss (NP) aufweist und aus den an den Kondensatoren ($C_1$, $C_2$) anliegenden Gleichspannungen ($U_{DC1}$, $U_{DC2}$) ein Gleichspannungsdifferenzwert ($\overline{U_{NP}}$) gebildet wird, bei dem jede Phase (u, v, w) der Umrichterschaltung durch Leistungshalbleiterschalter der Umrichterschaltung nach jeweils einer vorgegebenen Abfolge (PM) von Schaltzuständen innerhalb einer vorgegebenen Zeitdauer mit dem ersten Hauptanschluss ($V_+$), mit dem zweiten Hauptanschluss (V.) oder mit dem Teilanschluss (NP) verbunden wird, wobei die Schaltzustände der Phasen (u, v, w) zueinander durch Schaltzustandskombinationen (SK) vorgegeben sind und die Schaltzustandskombinationen (SK) in einem Abfolgeablauf festgelegt sind, bei dem der Gleichspannungsdifferenzwert ($\overline{U_{NP}}$) auf einen Schwellwert ($U_{OCS1}$) hin überwacht wird, und bei dem die Phasen (u, v, w) bei Überschreiten oder Unterschreiten des Schwellwertes ($U_{DCS1}$) nach einer in Abhängigkeit der vorangehenden Schaltzustandskombination ($SK_v$) des Abfolgeablaufs, der Flussrichtung eines Phasenstromes ($i_u$, $i_v$, $i_w$) und des Überschreitens oder des Unterschreitens des Schwellwertes ($U_{DCS1}$) ausgewählten Schaltzustandskombination ($SK_a$) mit dem ersten Hauptanschluss ($V_+$), mit dem zweiten Hauptanschluss (V.) oder mit dem Teilanschluss (NP) verbunden werden, **dadurch gekennzeichnet,** **dass** die Phasen (u, v, w) bei einem die Grundschwingung von Phasenausgangsspannungen ($U_u$, $U_v$, $U_w$) ändernden Übergang zur ausgewählten Schaltzustandskombination ($SK_a$) in einem ersten Schritt nach einer dieselben Phasenleiterspannungen ($U_{uv}$, $U_{vw}$, $U_{wu}$) wie die ausgewählte Schaltzustandskombination ($SK_a$) erzeugende Schaltzustandskombination ($SK_n$) mit dem ersten Hauptanschluss ($V_+$), mit dem zweiten Hauptanschluss (V.) oder mit dem Teilanschluss (NP) verbunden werden, wobei die dieselben Phasenleiterspannungen ($U_{uv}$, $U_{vw}$, $U_{wu}$) wie die ausgewählte Schaltzustandskombination ($SK_a$) erzeugende Schaltzustandskombination ($SK_n$) die im Abfolgeablauf nächstfolgende Schaltzustandskombination ($SK_n$) ist, **dass** die Phasen (u, v, w) in einem zweiten Schritt nach einer gewählten ersten zusätzlichen Schaltzustandskombination ($SK_{z1}$) und danach in einem dritten Schritt nach der ausgewählten Schaltzustandskombination ($SK_a$) mit dem ersten Hauptanschluss ($V_+$), mit dem zweiten Hauptanschluss (V.) oder mit dem Teilanschluss (NP) verbunden werden, und **dass** die Phasen (u, v, w) in einem vierten Schritt nach einer gewählten zweiten zusätzlichen Schaltzustandskombination ($SK_{z2}$) mit dem ersten Hauptanschluss ($V_+$), mit dem zweiten Hauptanschluss (V.) oder mit dem Teilanschluss (NP) verbunden werden, wobei die erste und die zweite zusätzliche Schaltzustandskombination ($SK_{z1}$; $SK_{z2}$) derart gewählt werden, dass die je Phase (u, v, w) aus den der ersten und zweiten zusätzlichen Schaltzustandskombination ($SK_{z1}$; $SK_{z2}$) entsprechenden Phasenausgangsspannungen ($U_{u,SK1}$, $U_{v,SKz1}$, $U_{w,SKz1}$, $U_{u,SKz2}$, $U_{v,SKz2}$, $U_{w,SKz2}$) gebildeten Mittelwerte ($\overline{U_u}$, $\overline{U_v}$, $\overline{U_w}$) jeweils gleich den in Bezug auf die Phase (u, v, w) entsprechenden Phasenaus-

gangsspannungen ($U_u$, $U_v$, $U_w$) der dieselben Phasenleiterspannungen ($U_{uv}$, $U_{vw}$, $U_{wu}$) wie die ausgewählte Schaltzustandskombination ($SK_a$) erzeugende Schaltzustandskombination ($SK_n$) sind.

2. Verfahren nach Anspruch 1, **dadurch gekennzeichnet, dass** die Phasen (u, v, w) in einem fünften Schritt nach der dieselben Phasenleiterspannungen ($U_{uv}$, $U_{vw}$, $U_{wu}$) wie die ausgewählte Schaltzustandskombination ($SK_a$) erzeugende Schaltzustandskombination ($SK_n$) mit dem ersten Hauptanschluss ($V_+$), mit dem zweiten Hauptanschluss ($V_-$) oder mit dem Teilanschluss (NP) verbunden werden.

3. Verfahren einem der vorhergehenden Ansprüche, **dadurch gekennzeichnet, dass** bei der ausgewählten Schaltzustandskombination ($SK_a$) nur eine Anzahl der Phasen (u, v, w) mit dem ersten Hauptanschluss ($V_+$) und die restliche Anzahl der Phasen (u, v, w) mit dem Teilanschluss (NP) oder nur eine Anzahl der Phasen (u, v, w) mit dem zweiten Hauptanschluss ($V_-$) und der restliche Teil der Phasen (u, v, w) mit dem Teilanschluss (NP) verbunden wird.

4. Verfahren nach einem der vorhergehenden Ansprüche, **dadurch gekennzeichnet, dass** der Schwellwert ($U_{DCS1}$) in der Grössenordnung zwischen 0% und 3% der Summe der ersten und zweiten Gleichspannung ($U_{DC1}$, $U_{DC2}$) gewählt wird.

**Claims**

1. Method for balancing a DC voltage circuit (1) in a converter circuit for switching three voltage levels, in which the DC voltage circuit (1) is formed by a first capacitor ($C_1$) and by a second capacitor ($C_2$) which is connected in series with the first capacitor ($C_1$) and has a first main connection ($V_+$) on the first capacitor ($C_1$), a second main connection ($V_-$) on the second capacitor ($C_2$), and a partial connection (NP) which is formed by the two series-connected capacitors ($C_1$, $C_2$), and a DC voltage difference value ($\overline{U_{NP}}$) is formed from the DC voltages ($U_{DC1}$, $U_{DC2}$) across the capacitors ($C_1$, $C_2$), in which each phase (u,v,w) of the converter circuit is connected by means of power semiconductor switches in the converter circuit, in each case after a predetermined sequence (PM) of switching states within a predetermined time period, to the first main connection ($V_+$), to the second main connection ($V_-$) or to the partial connection (NP), with the switching states of the phases (u,v,w) with respect to one another being predetermined by switching state combinations (SK), and with the switching state combinations (SK) being defined in a sequence, in which the DC voltage difference value ($\overline{U_{NP}}$) is monitored for a threshold value ($U_{DCS1}$), and

in which, if the threshold value ($U_{DCS1}$) is overshot or undershot on the basis of a switching state combination ($SK_a$) which is selected as a function of the previous switching state combinations ($SK_V$) in the sequence, the flow direction of a phase current ($i_u$, $i_v$, $i_w$) and the overshooting or the undershooting of the threshold ($U_{DCS1}$), the phases (u,v,w) are connected to the first main connection ($V_+$), to the second main connection ($V_-$) or to the partial connection (NP),

**characterized**

**in that**, when a transition into the selected switching state combination ($SK_a$) which changes the fundamental frequency of the phase output voltages ($U_u$, $U_v$, $U_w$) takes place, in a first step after a switching state combination ($SK_n$) which produces the same phase conductor voltages ($U_{uv}$, $U_{vw}$, $U_{wu}$) as the selected switching state combination ($SK_a$), the phases (u, v, w) are connected to the first main connection ($V_+$), to the second main connection ($V_-$) or to the partial connection (NP), with the switching state combination ($SK_n$) which produces the same phase conductor voltages ($U_{uv}$, $U_{vw}$, $U_{wu}$) as the selected switching state combination ($SK_a$) being the next switching state combination ($SK_n$) in the sequence, **in that**, in a second state after a selected first additional switching state combination ($SK_{z1}$) and, after this, in a third step after the selected switching state combination ($SK_a$), the phases (u, v, w) are connected to the first main connection ($V_+$), to the second main connection ($V_-$) or to the partial connection (NP), and

**in that** in a fourth step after a selected second additional switching state combination ($SK_{z2}$), the phases (u,v,w) are connected to the first main connection ($V_+$), to the second main connection ($V_-$) or to the partial connection (NP), with the first and the second additional switching state combinations ($SK_{z1}$; $SK_{z2}$) being selected such that the mean values ($\overline{U}_u$, $\overline{U}_v$, $\overline{U}_w$) formed from each phase (u,v,w) from the phase output voltages ($U_{u,SK1}$, $U_{v,SKz1}$, $U_{w,SKz1}$, $U_{u,SK2}$, $U_{v,SKz2}$, $U_{w,SKz2}$) which correspond to the first and the second additional switching state combination to ($SK_{z1}$; $SK_{z2}$) in each case being equal to the phase output voltages ($U_u$, $U_v$, $U_w$) which correspond with respect to the phase (u, v, w) of the same phase conductor voltages ($U_{uv}$, $U_{vw}$, $U_{wu}$) as the switching state combination ($SK_n$) which produces the selected switching state combination ($SK_a$).

2. Method according to Claim 1, **characterized in that**, in a fifth step after the switching state combination ($SK_n$) which produces the same phase conductor voltages ($U_{uv}$, $U_{vw}$, $U_{wu}$) as the selected switching state combination ($SK_a$), the phases (u,v,w) are connected to the first main connection ($V_+$), to the second connection ($V_-$) or to the partial connection (NP).

**3.** Method according to one of the preceding claims, **characterized in that**, in the selected switching state combination (SK$_a$), only a number of the phases (u,v,w) are connected to the first main connection (V$_+$), and the remaining number of the phases (u,v,w) are connected to the partial connection (NP), or only a number of the phases (u,v,w) are connected to the second main connection (V$_-$), and the remaining phases (u,v,w) are connected to the partial connection (NP).

**4.** Method according to one of the preceding claims, **characterized in that** the threshold value (U$_{DCS1}$) is chosen to be in the order of magnitude of between 0% and 3% of the sum of the first and the second DC voltage (U$_{DC1}$, U$_{DC2}$).

**Revendications**

**1.** Procédé pour améliorer la symétrie dans un circuit (1) à tension continue d'un circuit de convertisseur destiné à raccorder trois niveaux de tension, dans lequel le circuit (1) à tension continue est formé par un premier condensateur (C$_1$) et un deuxième condensateur (C$_2$) raccordé en série sur le premier condensateur (C$_1$) et présente un premier raccordement principal (V$_+$) sur le premier condensateur (C$_1$), un deuxième raccordement principal (V$_-$) sur le deuxième condensateur (C$_2$) et un raccordement partiel (NP) formé par les deux condensateurs (C$_1$, C$_2$) raccordés en série, une valeur de différence de tension continue ($\overline{U_{NP}}$) étant formée à partir des tensions continues (U$_{DC1}$, U$_{DC2}$) appliquées sur les condensateurs (C$_1$, C$_2$),
dans lequel chaque phase (u, v, w) du circuit de convertisseur est reliée pendant une durée prédéterminée par des commutateurs de puissance à semiconducteur du circuit de convertisseur au premier raccordement principal (V$_+$), au deuxième raccordement principal (V$_-$) ou au raccordement partiel (NP) selon une succession prédéterminée (PM) d'états de commutation, les états de commutation mutuelle des phases (u, v, w) étant prédéterminés par des combinaisons (SK) d'états de commutation et les combinaisons (SK) d'états de commutation étant définies dans une succession,
dans lequel on surveille une valeur de seuil (U$_{DCS1}$) de la valeur ($\overline{U_{NP}}$) de différence de tension continue et
dans lequel, lorsque la valeur de seuil (U$_{DCS1}$) est dépassée ou n'est pas atteinte, les phases sont reliées au premier raccordement principal (V$_+$), au deuxième raccordement principal (V$_-$) ou au raccordement partiel (NP) en fonction d'une combinaison (SK$_a$) d'états de commutation sélectionnée en fonction de la combinaison précédente (SK$_V$) d'états de commutation de la succession, de la direction d'écoulement d'un courant de phase (i$_u$, i$_v$, i$_w$) et selon que la valeur de seuil (U$_{DCS1}$) est dépassée ou n'est pas atteinte,
**caractérisé en ce que**
lors d'une transition vers la combinaison (SK$_a$) sélectionnée d'états de commutation qui modifie l'oscillation de base des tensions de sortie (U$_u$, U$_v$, U$_w$) des phases, les phases (u, v, w) sont reliées dans une première étape au premier raccordement principal (V$_+$), au deuxième raccordement principal (V$_-$) ou au raccordement partiel (NP) selon une combinaison (SK$_n$) d'états de commutation qui crée les mêmes tensions (U$_{UV}$, U$_{VW}$, U$_{WU}$) de conducteurs de phase que la combinaison sélectionnée (SK$_a$) d'états de commutation, la combinaison (SK$_n$) d'états de commutation qui crée les mêmes tensions (U$_{uv}$, U$_{vw}$, U$_{wu}$) de conducteurs de phase que la combinaison sélectionnée (SK$_a$) d'états de commutation étant la combinaison (SK$_n$) d'états de commutation suivante dans la succession,
**en ce que** dans une deuxième étape, les phases (u, v, w) sont reliées au premier raccordement principal (V$_+$), au deuxième raccordement principal (V$_-$) ou au raccordement partiel (NP) selon une première combinaison supplémentaire sélectionnée (SK$_{z1}$) d'états de commutation, les phases étant ensuite reliées dans une troisième étape au premier raccordement principal (V$_+$), au deuxième raccordement (V$_-$) ou au raccordement partiel (NP) selon la combinaison sélectionnée (SK$_a$) d'états de commutation et
**en ce que** dans une quatrième étape, les phases (u, v, w) sont reliées au premier raccordement principal (V$_+$), au deuxième raccordement principal (V$_-$) ou au raccordement partiel (NP) selon une deuxième combinaison supplémentaire sélectionnée (SK$_{z2}$) d'états de commutation, la première et la deuxième combinaison supplémentaire (SK$_{z1}$; SK$_{z2}$) d'états de commutation étant sélectionnées de telle sorte que les valeurs moyennes ($\overline{U}_u$, $\overline{U}_v$, $\overline{U}_w$) formées pour chaque phase (u, v, w) à partir des tensions de sortie de phase (U$_{u,SK1}$, U$_{v,SKz1}$, U$_{w,SKz1}$, U$_{u,SK2}$, U$_{v,SKz2}$, U$_{w,SKz2}$) qui correspondent à la première et à la deuxième combinaison supplémentaire (SK$_{z1}$; SK$_{z2}$) d'états de commutation soient égales aux tensions (U$_u$, U$_v$, U$_w$) de sortie de phase qui correspondent aux phases (u, v, w) des mêmes tensions (U$_{uv}$, U$_{vw}$, U$_{wu}$) de conducteurs de phase que la combinaison (SK$_n$) d'états de commutation qui forme la combinaison sélectionnée (SK$_a$) d'états de commutation.

**2.** Procédé selon la revendication 1, **caractérisé en ce que** dans une cinquième étape, les phases (u, v, w) sont raccordées au premier raccordement principal (V$_+$), au deuxième raccordement principal (V$_-$) ou au raccordement partiel (NP) en fonction de la combinaison (SK$_n$) qui forme les mêmes tensions (U$_{uv}$, U$_{vw}$, U$_{wu}$) de conducteurs de phase que la com-

binaison sélectionnée ($SK_a$) d'états de commutation.

3. Procédé selon l'une des revendications précédentes, **caractérisé en ce que** dans la combinaison sélectionnée ($SK_a$) d'états de commutation, seul un certain nombre des phases (u, v, w) est relié au premier raccordement principal ($V_+$) et le nombre restant des phases (u, v, w) est relié au raccordement partiel (NP), ou seul un certain nombre des phases (u, v, w) est relié au deuxième raccordement principal ($V_-$) et la partie restante des phases (u, v, w) est reliée au raccordement partiel (NP).

4. Procédé selon l'une des revendications précédentes, **caractérisé en ce que** la valeur de seuil ($U_{DCS1}$) sélectionnée a une valeur de l'ordre de 0 % à 3 % de la somme de la première et de la deuxième tension continue ($U_{DC1}$, $U_{DC2}$).

Fig. 1

**Fig. 2a**

Fig. 2b

| SK | $i_u$ positive bei Unterschreiten von $U_{DCS1}$ | $i_u$ positive bei Überschreiten von $U_{DCS1}$ | $i_u$ negativ bei Unterschreiten von $U_{DCS1}$ | $i_u$ negativ bei Überschreiten von $U_{DCS1}$ |
|---|---|---|---|---|
| 10, 11 | 11 | 10 | 10 | 11 |
| 22, 23 | 23 | 22 | 22 | 23 |

| SK | $i_v$ positive bei Unterschreiten von $U_{DCS1}$ | $i_v$ positive bei Überschreiten von $U_{DCS1}$ | $i_v$ negativ bei Unterschreiten von $U_{DCS1}$ | $i_v$ negativ bei Überschreiten von $U_{DCS1}$ |
|---|---|---|---|---|
| 6, 7 | 7 | 6 | 6 | 7 |
| 18,19 | 19 | 18 | 18 | 19 |

| SK | $i_w$ positive bei Unterschreiten von $U_{DCS1}$ | $i_w$ positive bei Überschreiten von $U_{DCS1}$ | $i_w$ negativ bei Unterschreiten von $U_{DCS1}$ | $i_w$ negativ bei Überschreiten von $U_{DCS1}$ |
|---|---|---|---|---|
| 2, 3 | 3 | 2 | 2 | 3 |
| 14,15 | 15 | 14 | 14 | 15 |

**Fig. 2c**

Fig. 3

## IN DER BESCHREIBUNG AUFGEFÜHRTE DOKUMENTE

**In der Beschreibung aufgeführte Patentdokumente**

- EP 1513249 A1

- EP 0451440 A2